# EUROPEAN PATENT SPECIFICATION

(11) **EP 0 712 235 B1**
(45) Date of publication and mention of the grant of the patent: **02.05.2002**
(21) Application number: 95307989.4
(22) Date of filing: 08.11.1995
(51) Int. Cl.: H04N 1/405

(54) **Pixel pair grid halftoning for a hyperacuity printer**
Halbtonrasterung von Bildelementpaaren für einen Drucker mit hoher Schärfe
Obtention de demi-teintes par grille de paires d'éléments d'image pour une imprimante à haute acuité

(30) Priority: 08.11.1994 US 335662
(43) Date of publication of application: 15.05.1996
(73) Proprietor: XEROX CORPORATION, Rochester, New York 14644 (US)
(72) Inventor: Curry, Douglas N., Menlo Park, California 94025 (US)
(74) Representative: Grünecker, Kinkeldey, Stockmair & Schwanhäusser Anwaltssozietät

(56) References cited:
- EP-A- 0 201 674
- EP-A- 0 382 581
- WO-A-89/08962
- US-A- 5 006 937
- US-A- 5 077 615
- US-A- 5 196 942

## Description

The invention concerns an apparatus for processing an image data and a method for processing electronic image data according to the preambles of claims 1 and 8, respectively.

Digital halftoning, sometimes referred to as "spatial dithering", is the process of creating a binary approximation to a sampled gray scale image. Sampled gray scale values are typically quantized to have one of a discrete number of values, e.g., 256 or 1024 values. The basic idea in digital halftoning is to replace these quantized picture elements (pixels) from a region of the gray scale image having an average value of x (where 0 = white and 1=black) with a binary pattern of 1s and 0s. Halftoning works because the human eye perceives a set of closely spaced black and white spots as a shade of gray. Alternatively, it may be said that the eye acts as if it contains a spatial low pass filter.

In accordance with one known halftoning technique, the fraction of resulting 1s is approximately x. The binary pattern is then conveniently used with a display device such as a CRT display or a printer to produce the values for the pixels in the gray scale halftone image. If the 1s and 0s are supplied to a printer where the is are printed as black spots and spaces are sufficiently close together, the eye averages the black spots and white spaces to perceive, approximately, gray level x. In so perceiving the image, the eye exhibits a low-pass filtering characteristic. The number of gray scale samples (pixels) is advantageously equal to the number of bits in the binary pattern.

In recent years there has been increasing demand for digital storage and transmission of gray scale images. In part, this is due to the increasing use of laser printers having a resolution of, e.g., 600 spots (dots) per inch (dpi)(24 dots/mm), to produce halftone approximations to gray scale images such as photographs, art work, design renderings, magazine layouts, etc. The conventional approach to achieving high quality halftone images is to use a high resolution printer. However, the printer resolution required for transparent halftoning with prior art techniques is of the order of 1400 dpi. Such printers are often slow and expensive.

Many prior art halftoning techniques assume that the black area of a printed binary pattern is proportional to the fraction of is in the pattern. This means that the area occupied by each black dot is roughly the same as the area occupied by each white dot. Thus, the "ideal" shape for the black spots produced by a printer (in response to is) would be TxT squares, where T is the spacing between the centers of possible printer spots. However, most practical printers produce approximately circular spots. It is clear, therefore, that the radius of the dots must be at least T/√2 so that an all-ls binary pattern is capable of blackening a page entirely. This has the unfortunate consequence of making black spots cover portions of adjacent spaces, causing the perceived gray level to be darker than the fraction of is. Moreover, most printers produce black spots that are larger than the minimal size (this is sometimes called "ink spreading"), which further distorts the perceived gray level. The most commonly used digital halftoning techniques (for printing) protect against such ink spreading by clustering black spots so the percentage effect on perceived gray level is reduced. Unfortunately, such clustering constrains the spatial resolution (sharpness of edges) of the perceived images and increases the low-frequency artifacts. There is a tradeoff between the number of perceived gray levels and the visibility of low-frequency artifacts.

Block replacement is one commonly used halftoning technique to improve perceived and gray scale images. Using this technique, the image is subdivided into blocks (e.g. 6x6 pixels) and each block is "replaced" by one of a predetermined set of binary patterns (having the same dimensions as the image blocks). Binary patterns corresponding to the entire image are then supplied to a printer or other display device. Typically, the binary patterns in the set have differing numbers of 1s, and the pattern whose fraction of 1s best matches the gray level of the image block is selected. This block replacement technique is also referred to as pulse-surface-area modulations.

In another halftoning technique known as screening, the gray scale array is compared, pixel by pixel, to an array of thresholds. A black dot is placed wherever the image gray level is greater than the corresponding threshold. In the so-called random dither variation of this technique, the thresholds are randomly generated. In another variation, known as ordered dither, the thresholds are periodic. More specifically, the threshold array is generated by periodically replicating a matrix (e.g. 6x6) of threshold values.

A technique known as error diffusion is used in non-printer halftone display contexts to provide halftoning when ink spreading and other distortions common to printers are not present. Like most of the known halftoning schemes, error diffusion makes implicit use of the eye model. It shapes the noise, i.e., the difference between the gray scale image and the halftone image, so that it is not visible by the eye. The error diffusion technique produces noise with most of the noise energy concentrated in the high frequencies, i.e., so-called blue noise. Thus, it minimizes the low-frequency artifacts. However, since error diffusion does not make explicit use of the eye model, it is not easy to adjust when the eye filter changes, for example with printer resolution, or viewer distance. Error diffusion accomplishes good resolution by spreading the dots. It is thus very sensitive to ink spreading, in contrast to the clustered dot schemes like "classical" screening. In the presence of ink spreading, error diffusion often produces very dark images, therefore limiting its application to cases in which there is substantially no ink spreading.

Numerous researchers have estimated the spatial frequency sensitivity of the eye, often called the modulation transfer function (MTF). The eye is most sensitive to frequencies around 8 cycles/degree. Others have variously estimated the peak sensitivity to lie between 3 and 10 cycles/degree. The decrease in sensitivity at higher frequencies is generally ascribed to the optical characteristics of the eye (e.g. pupil size). The sensitivity of the eye drops 3 db from its peak at about 3 and 16 cycles/degree, 20 db at 35 cycles/degree, and about 46 db at 60 cycles/degree. The decrease in sensitivity at low frequencies accounts for the "illusion of simultaneous contrast" (a region with certain gray level appears darker when surrounded by a lighter gray level than when surrounded by a darker) and for the Moch band effect (when two regions with different gray levels meet at an edge, the eye perceives a light band on the light side of the edge and a dark band on the dark side of the edge).

The eye is more sensitive to horizontal or vertical sinusoidal patterns than to diagonal ones. Specifically, it is less sensitive to 45 degree sinusoids, with the difference being about 0.6 db at 10 cycles/degree and about 3 db at 30 cycles/degree. This is not considered to be large, but it is used to good effect in the most commonly used halftoning technique for printers.

Document EP-A-0 201 674 discloses a system for producing improved halftone images from continuous tone input images, the pixels of which have been digitized as gray scale values. A printer prints a set of output pixel patterns producing a respective set of discrete gray scale values. Pixel pattern blocks with discrete gray scale values approximating the gray scale values of the input pixels are selected for printing. The error in a first block due to the difference between the gray scale value associated with the block and the gray scale value of the corresponding input pixel is determined. This error is diffused by distributing same to at least two adjacent blocks. The distribution is determined randomly such that the error is divided between two blocks. Error fractions already assigned are taken into account. Furthermore, edge enhancement is provided for by determining the brightness gradient surrounding each input pixel, and a threshold value is set below which said gradient is classified as small and above which it is classified as large.

US-A-5 077 615 is related to an image recording apparatus reproducing a halftone image with high resolution by using a systematic dither method and an error scattering method. Sharpness of an image to be reproduced is selectively variable.

Standard error diffusion techniques have several drawbacks. First, errors are propagated which are a significant fraction of a mark. When the diffused error is large, an unpleasing texture results. Second, weighted errors are computed and propagated to adjacent pixels in a slow scan direction. This in turn requires computationally intensive algorithms for clustering and adjusting marks.

An object of the invention is to provide an apparatus capable of producing a binary data image in which a Moire pattern is not visually perceivable to the human eye when the binary data image is displayed.

This object is achieved in view of the apparatus by the features of the characterizing portion of claim 1. This object is achieved in view of the method by the features of the characterizing portion of claim 8.

Advantageous embodiments are set forth in the respective dependent claims.

In accordance with the present invention, a new halftoning technique is provided for hyperacuity printers. A source inputs image data which has a periodic function with a frequency that tends to create a Moire pattern within the image data. The image data is converted by a converter into a binary data image. The converter includes a logic circuit which combines gray scale density values of at least two adjacent pixels to produce a pixel pair value. The adjacent pixels are adjacent in a fast scan direction of a scan line. A look up table is addressed by the pixel pair value to retrieve corresponding binary data values for the two adjacent pixels. The frequency creating the Moire pattern is increased to a range where the Moire pattern is not visually perceivable when the binary data image is displayed.

The invention further provides a method for processing electronic image data including data values for each pixel of a plurality of scan lines, which image data has an inherent artifact frequency such that when the data values are converted into marks by a printer to produce a human-readable image, the human-readable image contains Moiré artifacts of a frequency that is sufficiently low that the Moire artifacts are visible to the human eye, characterised by including the steps of: combining data values corresponding to a plurality of adjacent pixels in a fast scan direction from said plurality of scan lines to derive a combined pixel value; and accessing a look-up table with said combined pixel value to retrieve a corresponding binary data value representing a gray scale density for said adjacent pixels such that the inherent artifact frequency is increased so that its Moire artifacts in the human-readable image become less visible to the human eye.

Preferably, the image data includes slope values defining an approaching edge, and the look-up table responds to the slope value by retrieving an edge binary data value for a pixel most closely adjacent a corresponding edge, such that the mark into which the edge binary pixel value is converted is substantially tangent to the edge.

The method preferably further includes the steps of: grouping a first set of pixels of said plurality of adjacent pixels in a fast scan direction on a first scan line in even/odd pixel pairs and combining the image data values of said even/odd pixel pairs to obtain a first combined data value; and grouping a second set of pixels of said plurality of adjacent pixels in the fast scan direction on a second scan line in odd/even pixel pairs and combining the image data values of said odd/even pixel pairs to obtain a second combined data value, whereby the combined data values of said second scan line are staggered relative to the combined data values of the first scan line.

In one embodiment of the present invention, the converter adds a carryover error value which is propagated from a previous pixel pair to the pixel pair value. The error is only propagated in the fast scan direction. The carryover error value is outputted from the look-up table to the logic circuit.

In another embodiment of the present invention, edge slope information defining a slope of an edge approaching a current pixel, and space information defining a minimum inter-pixel mark space requirement for the current pixel are included in the image data and are used to access the look-up table.

One advantage of the present invention is that a high frequency halftone image is produced. Low frequency Moire patterns are increased to a frequency level that is not visually perceivable once displayed. The displayed output data has a consistent and uniform intensity level across a page.

Another advantage of the present invention is that the apparatus and method drives a high addressability gray modulator resulting in an error having a smaller proportion to a mark and thus, is not required to be propagated in the slow scan direction. Pixels are added in even/odd pairs in the fast scan direction. Any resulting errors are propagated only in the fast scan direction to the next pixel pair.

The invention will now be described, by way of example, with reference to the accompanying drawings, in which:
FIGURE 1 is a block diagram of the present invention; and,
FIGURE 2 is a diagram of image data represented by lines of pixels.

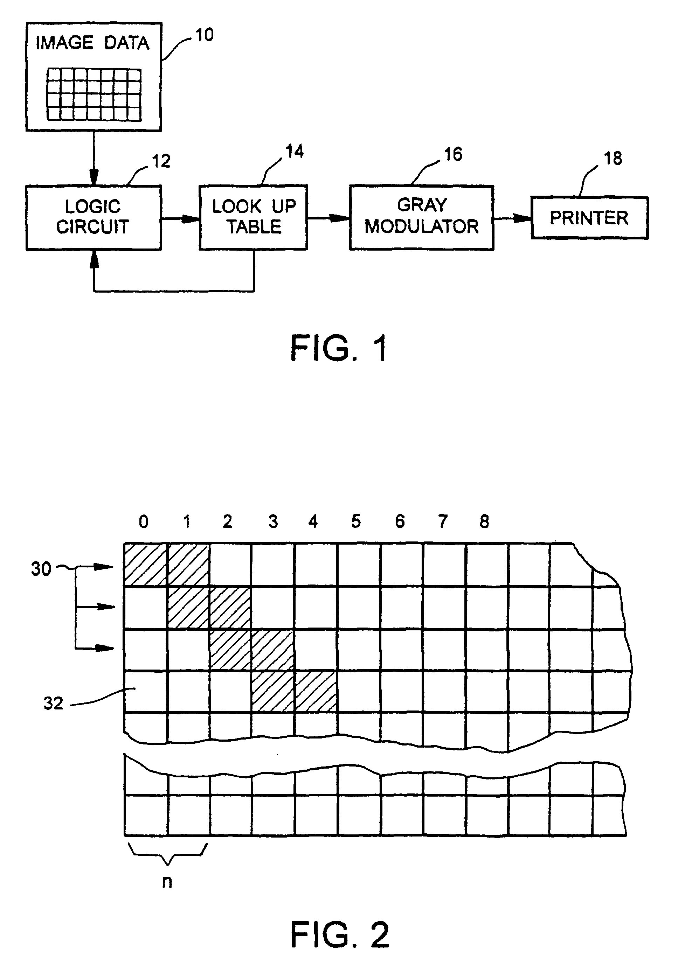

With reference to FIGURE 1, an input image 10 to be processed is represented by a set of gray signals (gray pixels) arranged in an array of scan lines. Each scan line contains a plurality of gray pixels each defining an optical density level varying between a minimum and a maximum value. Each pixel is therefore defined by its optical density and position in the image. Gray values or levels for gray pixels are typically expressed as integers, with one example falling in the range from 0 to 255, although greater or lesser number of levels, as well as non-integer representations, are possible. An output image is considered to consist of pixels, each pixel corresponding to a printer signal that will drive a printer or display to produce a spot.

Pixel and slope information from the image data 10 enter the logic circuit 12. The pixels are grouped in adjacent pairs according to an internal grid parameter for each scan line. Values of each pixel pair are summed or averaged. A predetermined error propagated from a previous pixel pair along the same scan line is added to the total if such error exists. This total value is used as an address to access a look-up table 14. The look-up table 14 supplies a closest fit high addressability mark corresponding to a binary data value for each pixel of the current pixel pair. The binary data values are sent to a gray modulator 16 and corresponding halftone dots are outputted to printer 18.

The look-up table 14 feeds back a new error and space value to be propagated to the next pixel pair in the fast scan direction. An error occurs when the smallest space (white area) or a smallest mark (black area) which are defined for a target printer 18, are exceeded by the value of the averaged pixel pairs. For example, if there is a need to print a smaller area than the defined area for the target printer, the smallest defined area will be printed and the excess value will be propagated to the next pixel pair as an error. Thus, error is the difference between what was actually printed and the total sum of what is desired to have been printed. By including this error diffusion technique of propagating an error along only the fast scan direction, proper density over several dots is insured instead of for one dot.

With reference to FIGURE 2, the image data is represented by a plurality of scan lines 30. Each scan line is formed by a plurality of pixels 32. Exemplary pixel pairs are represented by the shaded pixels. A halftone cell is defined as being n addressability units wide in the fast scan direction of a scan line. The halftone cell is defined by a width of a pixel pair. The halftone cell has a height of 1 pixel in the process direction. The n/2 addressability units in each pixel correspond to an optical density level of a portion of the image data represented by the pixel. Pixel values correspond to gray scale image data. For printing by a printer, the gray scale image data is converted to binary data. The look-up table 14 is used to effectuate the conversion in real time. The gray scale sum of each pixel pair along with any carryover error, form a memory address to access the look-up table 14. The table 14 is pre-programmed to retrieve a best fit binary data value for the n addressability units of the pixel pair and to carryover any round-off error or unused gray scale data for the next pixel pair. The carryover error results when the pixel pair gray scale sum cannot be fit evenly into the n addressability units which are each constrained to assume a 1 or a 0 value. The addressability unit values could be calculated on the fly, but such calculations would use several clock cycles. For greater speed, the addressability unit values are precalculated and stored in a look-up table that is addressable in a single clock cycle.

Marks are created by turning on a certain number of addressability units in the halftone cell corresponding to the averaged sum of the two pixels plus the error from the previous pixel pair. By sequentially turning on more and more addressability units, a higher and higher density is created for the halftone cell.

On subsequent scan lines, the pixels forming the pixel pairs are staggered by 1 pixel each scan line. Thus in a first scan line, even/odd pixels are combined to form the pixel pairs and in a second scan line, odd/even pixels are combined to form pixel pairs. That is, the groups of n addressability units are shifted in each subsequent scan line by one pixel. By grouping pixels into pairs, twice as many addressability units are available for an improved gray scale fit and less carryover or round-off error. By staggering the pixel pairs along scan lines, an undulating grid is formed on a photoreceptor (not shown) of the printer 18. The pixel grouping and grid staggering create the equivalent of a very high frequency halftone screen. Outputted binary data tends to contain a periodic function which has a frequency creating a Moire pattern. This conversion technique decreases the carryover error, doubles the distance over which the carryover error and any periodic functions are spread, alters the periodicity of any periodic functions from line to line, and staggers the vertical coherency of any periodic functions from line to line. This increases the frequency of the Moire pattern outside the band width perceivable by the human eye. Thus, the Moire pattern is effectively eliminated. Of course, other numbers of pixels, e.g., 3, may be combined to obtain an increase of the Moiré frequency.

In another embodiment, a space parameter, a slope parameter, and a grid parameter, as are known in the art, are supplied along with the pixel pair sum and the error to the look-up table. The space parameter defines a minimum inter-dot spacing. In other words, it defines a minimum white area or space which is provided between a trailing edge of the previous pixel and a leading edge of the present pixel so that the minimum space requirements for the current pixel can be maintained. The slope parameter defines the slope of an edge that intersects a current pixel or is within three adjacent pixels of the current pixel. The grid value defines shifts or offset in the dot portions. By further utilizing slope information to promote clustering (where the slope is determined from four adjacent pixels forming a square) edges will be rendered exceptionally well due to the fine pitch of the dots.

The slope information indicates where an edge is supposed to exist. When an edge is present, the mark closest to the edge is adjusted such that it is tangential to the edge. The edge mark or dot is shifted in the fast scan direction, enlarged (or contracted), or a combination of the two. For a substantial vertical slope, the dot is shifted. For a flat slope, marks are grown from the center of the pixel to expand the edges outward. For slopes which ascend or descend at some high rate, the mark is grown from an appropriate fast scan direction edge to promote clustering and better edge positioning. For slow scan direction slopes, gray values are delivered by the corresponding addressability units which can move edges in the slow scan direction. Thus, the slope information input to the look-up table causes the corresponding dot size and position to be output. Constraining the size and position of a dot three or four pixels, i.e., seven or eight dots away, sets a boundary constraint on the inter-dot spacing of the intervening dots and potentially adjusts the carryover error. The space parameter constrains the maximum dot size for each pixel such that the minimum inter-dot spacing for the corresponding gray scale is maintained. The space parameter holds the value of the white area from the previous pixel pair. If the current pixel pair sum is not sufficient to maintain the white area, the space parameter adjusts the dot size and any shift in dot position imposed by an approaching or an immediate past edge in order to maintain the minimum distance between black dots.

The grid value identifies any shifts in the dot position attributable to an approaching or a past edge. For example, when there are 8 clock pulses per pixel, the dot can be placed in any of 8 positions. Based in an approaching or past edge induced dot placement shift error, the look-up table feeds back a grid value error such that the edge dot shift is spread over up to the preceding three or four pixels and up to the following three or four pixels.

The look-up table values are precalculated in accordance with the well-known prior art calculations. The inputs to the look-up table are preferably the sum of the gray scale values and the conventional slope, space, grid, and feedback errors in each category. The average of the gray scales could also be used. However, the sum increases the dynamic range of the look-up table, eliminates round off errors, and saves a calculation. Both dots of the pixel pair are output by the look-up table in accordance with the slope, gray scale, space, grid, and carryover error information.

## Claims

1. An apparatus for processing an image data, the apparatus comprising:
a source (10) of image data, said image data having an inherent periodic function with a frequency which creates an unwanted Moiré pattern artifact of like frequency in said image data; and
a converter (12,14) for converting said image data into a binary data image,
**characterized by**
the converter including:
a logic circuit (12) for combining gray scale density values of at least two adjacent pixels (32) to produce a pixel pair value, said adjacent pixels being adjacent in a fast scan direction of a scan line (30), and
a look-up table (14) which is addressed by said pixel pair value to retrieve corresponding binary data values for said two adjacent pixels (32), the converter increasing the frequency of the Moiré pattern to a range in which the Moiré pattern is not visually perceivable to the human eye when the binary data image is displayed.

2. The apparatus as set forth in claim 1, wherein said logic circuit includes:
an adder for adding a carryover error value from a previous pixel pair to said pixel pair value and the look-up table (14) outputting a carryover error to the logic circuit (12) for addition to a subsequent pixel pair value.

3. The apparatus as set forth in claim 1 or 2 further including:
a printer (18) which converts each binary data value to a mark of corresponding size such that the marks produce a gray scale intensity which corresponds to a gray scale intensity of a corresponding area of the image data.

4. The apparatus as set forth in claim 1, 2 or 3 further including a printer (18) which converts the binary data values to a mark of corresponding size for each of the pixels (32) whose gray scale density values were combined by the logic circuit (12).

5. The apparatus as set forth in any of the preceding claims, wherein the look-up table is further addressed by edge slope information and retrieves a corresponding binary edge data value which constrains a corresponding mark to be tangential to an edge and further feeds back mark spacing information to the logic circuit and further including a printer which converts the edge data values into marks that are tangential to a corresponding edge and converts the binary data values to marks sized and spaced to produce a corresponding gray scale intensity.

6. The apparatus as set forth in claim 1, wherein the logic circuit (12) is further formed for staggering the at least two adjacent pixels (32) in subsequent scan lines.

7. The apparatus as set forth in claim 6, wherein the at least two adjacent pixels (32) are staggered by 1 pixel in each scan line by the logic circuit (12).

8. A method for processing electronic image data (10) including data values for each pixel (32) of a plurality of scan lines (30), which image data has an inherent artifact frequency such that when the data values are converted into marks by a printer (18) to produce a human-readable image, the human-readable image contains Moiré artifacts of a frequency that is sufficiently low that the Moiré artifacts are visible to the human eye, **characterized by** including the steps of:
combining data values corresponding to a plurality of adjacent pixels (32) in a fast scan direction from said plurality of scan lines (30) to derive a combined pixel value; and
accessing a look-up table (14) with said combined pixel value to retrieve a corresponding binary data value representing a gray scale density for said adjacent pixels such that the inherent artifact frequency is increased so that its Moiré artifacts in the human-readable image become less visible to the human eye.

9. The method as set forth in claim 8, wherein said combining step includes:
adding an error value derived from a previous combined pixel value to said combined pixel value.

10. The method as set forth in claim 8, wherein said combining step includes:
staggering the plurality of adjacent pixels (32) in subsequent scan lines.

11. The method as set forth in claim 10, wherein the plurality of adjacent pixels (32) are staggered by 1 pixel in each scan line.

## Patentansprüche

1. Vorrichtung zur Verarbeitung einer Bildinformation, wobei die Vorrichtung enthält:
eine Quelle (10) einer Bildinformation, wobei die Bildinformation eine inhärente periodische Funktion mit einer Frequenz hat, die einen ungewünschten Moiré-Muster-Bildfehler mit gleicher Frequenz wie die der Bildinformation erzeugt, und
einen Umwandler (12, 14) zur Umwandlung der Bildinformation in ein binäres Datenbild,
**dadurch gekennzeichnet, daß**
der Umwandler enthält:
eine Logikschaltung (12) zum Zusammenführen von Graustufen-Dichtewerten aus mindestens zwei angrenzenden Pixel (32) zum Erzeugen eines Pixelpaarwertes, wobei die angrenzenden Pixel in einer schnellen Abtastrichtung einer Abtastlinie (30) angrenzen, und
eine Verweistabelle (14), die durch den Pixelpaarwert adressiert ist, um entsprechende binäre Datenwerte für die zwei angrenzenden Pixel (32) wiederzugewinnen, wobei der Umwandler die Frequenz des Moiré-Musters auf einen Bereich erhöht, in welchem das Moiré-Muster für das menschliche Auge visuell nicht wahrnehmbar ist, wenn das binäre Datenbild ausgegeben wird.

2. Vorrichtung nach Anspruch 1, wobei die logische Schaltung enthält:
eine Additionsschaltung zum Addieren eines Übertrag-Fehlerwertes aus einem vorherigen Pixelpaar zu dem Pixelpaarwert, und wobei die Verweistabelle (14) den Übertrag-Fehler an die Logikschaltung (12) zur Addition zu einem nachfolgenden Pixelpaarwert ausgibt.

3. Vorrichtung nach Anspruch 1 oder 2, ferner enthaltend:
einen Drucker (18), der jeden binären Datenwert umwandelt in ein Zeichen entsprechender Größe, so daß das Zeichen eine Graustufenintensität erzeugt, die einer Graustufenintensität eines entsprechenden Bereichs der Bildinformation entspricht.

4. Vorrichtung nach Anspruch 1, 2 oder 3, ferner enthaltend einen Drucker (18), der die binären Datenwerte umwandelt in ein Zeichen entsprechender Größe für jedes der Pixel (32), dessen Graustufendichtewerte durch die Logikschaltung (12) zusammengefaßt wurden.

5. Vorrichtung nach einem der vorhergehenden Ansprüche, wobei die Verweistabelle ferner durch eine Kantenneigungsinformation adressiert ist und einen entsprechenden binären Kantendatenwert wiedergewinnt, welcher ein entsprechendes Zeichen so einschränkt, daß es tangential zu einer Kante ist und ferner eine Zeichen-Zwischenrauminformation an die Logikschaltung zurückgibt und ferner enthaltend einen Drucker, der die Kantendatenwerte umwandelt in Zeichen, die tangential zu einer entsprechenden Kante sind und die binären Datenwerte in Zeichen umwandelt, die derart dimensioniert und beabstandet sind, um eine entsprechende Graustufenintensität zu erzeugen.

6. Vorrichtung nach Anspruch 1, wobei die Logikschaltung (12) ferner ausgebildet ist zum Versetzen der mindestens zwei angrenzenden Pixel (32) in aufeinanderfolgende Abtastlinien.

7. Vorrichtung nach Anspruch 6, wobei die mindestens zwei angrenzenden Pixel (32) durch die Logikschaltung (12) um einen Pixel in jeder Abtastlinie versetzt werden.

8. Verfahren zur Verarbeitung einer elektronischen Bildinformation (10), enthaltend Datenwerte für jeden Pixel (32) einer Vielzahl von Abtastlinien (30), wobei die Bildinformation eine inhärente Bildfehler-Frequenz hat, so daß, wenn die Datenwerte durch einen Drucker (18) in Zeichen umgewandelt werden, um ein von einem Menschen erkennbares Bild zu erzeugen, das von dem Menschen erkennbare Bild Moiré-Bildfehler einer Frequenz enthält, die so klein ist, daß die Moiré-Bildfehler für das menschliche Auge sichtbar sind, **gekennzeichnet durch** die Schritte:
Zusammenfassen von einer Vielzahl von angrenzenden Pixel (32) entsprechenden Datenwerten in einer schnellen Abtastrichtung aus der Vielzahl von Abtastlinien (30) zum Erhalten eines zusammengefaßten Pixelwertes, und
Zugreifen auf eine Verweistabelle (14) mit dem zusammengefaßten Pixelwert, um einen entsprechenden binären Datenwert wiederzugewinnen, der eine Graustufendichte der angrenzenden Pixel darstellt, so daß die inhärente Bildfehler-Frequenz zunimmt, so daß die Moiré-Bildfehler in dem von dem Menschen erkennbaren Bild für das menschliche Auge weniger sichtbar werden.

9. Verfahren nach Anspruch 8, wobei der Zusammenfassungsschritt enthält:
Addieren eines aus einem vorher zusammengefaßten Pixelwert hergeleiteten Fehlerwertes zu dem zusammengefaßten Pixelwert.

10. Verfahren nach Anspruch 8, wobei der Zusammenfassungsschritt enthält:
Versetzen der Vielzahl angrenzender Pixel (32) in aufeinanderfolgenden Abtastlinien.

11. Verfahren nach Anspruch 10, wobei die Vielzahl angrenzender Pixel (32) um einen Pixel in jeder Abtastlinie versetzt werden.

## Revendications

1. Appareil de traitement de données d'images, l'appareil comprenant :
une source (10) de données d'image, lesdites données d'image possédant une fonction périodique inhérente avec une fréquence qui crée un défaut de configuration de moirage indésirable du genre fréquence dans lesdites données d'image ; et
un convertisseur (12, 14) pour la conversion desdites données d'image en image à données binaires ;
**caractérisé en ce que**
le convertisseur comprend :
un circuit logique (12) pour la combinaison des valeurs de densité sur l'échelle des gris d'au moins deux éléments d'image adjacents (32) afin de générer une valeur de paire d'éléments d'image, lesdits éléments d'image adjacents étant adjacents dans une direction de balayage rapide d'une ligne de balayage (30), et
un tableau de référence (14) qu'interroge ladite valeur de paire d'éléments d'image pour retrouver les valeurs de données binaires correspondantes pour lesdits deux éléments d'image adjacents (32), le convertisseur augmentant la fréquence de la configuration de moirage jusque dans un domaine dans lequel la configuration de moirage n'est plus visuellement perceptible pour l'oeil humain quand l'image à données binaire est visualisée.

2. Appareil selon 1a revendication 1, dans lequel ledit circuit logique comprend :
un additionneur pour l'addition d'une valeur d'erreur de transfert issue de la valeur de la paire précédente d'éléments d'image, et la délivrance par le tableau de référence (14) d'une erreur de transfert au circuit logique (12) pour addition à la valeur suivante de paire d'éléments d'image.

3. Appareil selon la revendication 1 ou 2 comprenant en outre :
une imprimante (18) qui convertit chaque valeur de donnée binaire en une marque de taille correspondante, de sorte que les marques génèrent sur l'échelle des gris une intensité qui correspond à une intensité sur l'échelle des gris d'une zone correspondante des données d'image.

4. Appareil selon la revendication 1, 2 ou 3 comprenant en outre une imprimante (18) qui convertit chaque valeur de donnée binaire en une marque de taille correspondante pour chacun des éléments d'image (32) dont les valeurs de densité sur l'échelle des gris sont combinées par le circuit logique (12).

5. Appareil selon l'une quelconque des revendications précédentes, dans lequel le tableau de référence est également interrogé par l'information de pente des bords et retrouve une valeur correspondante de valeur de donnée binaire de bord qui oblige une marque correspondante à être tangente à un bord et ramène en outre une information d'espacement de marques au circuit logique, et qui comprend en outre une imprimante qui convertit les valeurs de données de bord en marques qui sont tangentes à un bord correspondant et convertit les valeurs de données de bord en marques qui sont tangentes à un bord correspondant et convertit les valeurs de données binaires en marques de taille et d'espacement propres à générer une intensité correspondante sur l'échelle des gris.

6. Appareil selon la revendication 1, dans lequel le circuit logique (12) est de plus constitué pour décaler au moins deux éléments d'image adjacents (32) dans les lignes de balayage suivantes.

7. Appareil selon la revendication 6, dans lequel au moins deux éléments d'image adjacents (32) sont décalés d'un élément d'image dans chaque ligne de balayage par le circuit logique (12).

8. Procédé de traitement des données (10) d'image électronique, comprenant des valeurs de donnée pour chaque élément d'image (32) de plusieurs lignes de balayage (30), les données d'image possédant une fréquence inhérente de défaut telle que quand les valeurs de données sont converties en marques par une imprimante (18) pour générer une image lisible par l'homme, l'image lisible par l'homme contient des défauts de moirage à une fréquence suffisamment basse pour que les défauts de moirage soient visibles pour l'oeil humain, **caractérisé en ce qu'**il comprend les étapes consistant à :
combiner les valeurs de données correspondant à plusieurs éléments d'image adjacents (32) dans une direction de balayage rapide à partir desdites plusieurs lignes de balayage (30) afin d'établir une valeur combinée d'éléments d'image ; et
accéder à un tableau de référence (14) avec lesdites valeurs combinées d'éléments d'image afin de retrouver une valeur correspondante de donnée binaire représentant une densité sur l'échelle des gris pour lesdits éléments d'image adjacents de sorte que la fréquence inhérente de défaut soit augmentée de telle manière que les défauts de moirage dans l'image lisible par l'homme deviennent moins visibles à l'oeil humain.

9. Procédé selon la revendication 8, ladite étape de combinaison comprenant :
l'addition à ladite valeur d'éléments d'image combinés d'une valeur d'erreur déterminée à partir d'une valeur précédente d'éléments d'image combinés.

10. Procédé selon la revendication 8, ladite étape de combinaison comprenant :
le décalage de plusieurs éléments d'image adjacents (32) dans les lignes de balayage suivantes.

11. Procédé selon la revendication 10, dans lequel les plusieurs éléments d'image adjacents (32) sont décalés d'un élément d'image dans chaque ligne de balayage.
